# EUROPÄISCHE PATENTSCHRIFT

(11) **EP 1 155 916 B1**
(45) Veröffentlichungstag und Bekanntmachung des Hinweises auf die Patenterteilung: **03.03.2004**
(21) Anmeldenummer: 01109993.4
(22) Anmeldetag: 25.04.2001
(51) Int. Cl.: B60R 11/02

(54) **Anordnung zur Schnellbefestigung eines Gerätes in einer Einbauöffnung eines Kraftwagens**
Quick mounting device for an apparatus in a recess of a vehicle
Dispositif de fixation rapide d'un appareil dans une cavité d'un véhicule

(30) Priorität: 18.05.2000 DE 10024641
(43) Veröffentlichungstag der Anmeldung: 21.11.2001
(73) Patentinhaber: fischerwerke Artur Fischer GmbH & Co. KG, 72178 Waldachtal (DE); DaimlerChrysler AG, 70546 Stuttgart (DE)
(72) Erfinder: Köpff, Ralf, 72280 Dornstetten (DE); Schneider, Andreas, 72250 Freudenstadt (DE); Gänssler, Roland, 72250 Freudenstadt (DE); Breunig, Steffen, 75173 Pforzheim (DE)

(56) Entgegenhaltungen:
- DE-U- 8 806 357
- DE-U- 9 312 411
- US-A- 5 895 016

## Beschreibung

Die Erfindung betrifft eine Anordnung zur Schnellbefestigung eines Gerätes in einer Einbauöffnung beispielsweise in einer Mittelkonsole eines Kraftwagens mit den Merkmalen des Oberbegriffs des Anspruchs 1.

Das Einbaugerät kann beispielsweise ein Autoradio, ein CD-Spieler, ein Navigationsgerät sein. Zum Einbau solcher Geräte weisen Kraftwagen genormte Einbauöffnungen in der Mittelkonsole, im Armaturenbrett oder an sonstiger geeigneter Stelle auf, in die das Gerät steckbar ist. Zur Sicherung kann das Gerät in der Einbauöffnung verschraubt werden. Eine Verschraubung hat jedoch den Nachteil, dass sie zeitaufwendig und damit teuer ist.

Die gattungsbildende DE 93 12 411 U offenbart eine Vorrichtung zur diebstahlsicheren Befestigung eines Autoradios in einer Einbauöffnung in einem Armaturenbrett eines Kraftwagens. Die bekannte Vorrichtung weist eine Lasche mit einem Durchsteckloch an einer Rückseite des Autoradios auf, die nach dem Stecken des Autoradios in die Einbauöffnung von einem Schiebebolzen durchgriffen wird. Der Schiebebolzen benötigt eine Vorrichtung zu seiner Betätigung und ist am Ende der Einbauöffnung im Kraftwagen so angebracht, dass er bei in die Einbauöffnung gestecktem Autoradio nicht zugänglich ist. Die bekannte Vorrichtung ist aufwändig.

Der Erfindung liegt die Aufgabe zugrunde, eine Anordnung zur Schnellbefestigung eines Gerätes in einer Einbauöffnung vorzuschlagen.

Diese Aufgabe wird erfindungsgemäß durch die Merkmale des Anspruchs 1 gelöst. Erfindungsgemäß weist das Gerät mindestens zwei Verriegelungsflächen auf, die einer Steckrichtung des Geräts abgewandt sind. Mit Steckrichtung ist diejenige Richtung gemeint, in welcher das Gerät in die Einbauöffnung gesteckt wird. Abgewandt bedeutet, dass die Verriegelungsflächen in der Steckrichtung nach hinten gerichtet, d. h. einer Bedienfläche des Gerätes bzw. bei in die Einbauöffnung gestecktem Gerät einem Fahrgastraum des Kraftwagens zugewandt sind. Die Einbauöffnung weist mindestens einen Schieber auf, der an einer Seite des Gerätes angeordnet ist und der zwischen einer Montageposition und einer Verriegelungsposition hin- und herschiebbar ist. In der Verriegelungsposition übergreift der oder übergreifen die Schieber die Verriegelungsflächen des Gerätes, so dass das Gerät nicht aus der Einbauöffnung herausgezogen werden kann. In der Verriegelungsposition hält der Schieber das Gerät sicher in der Einbauöffnung verriegelt. In der Montageposition gibt der Schieber die Verriegelungsflächen frei, so dass das Gerät aus der Einbauöffnung herausgezogen oder in die Einbauöffnung gesteckt werden kann.

Zur stabilen und sicheren Halterung des Gerätes in der Einbauöffnung sieht die Erfindung zwei oder mehr Verriegelungsflächen an einander abgewandten Seiten des Gerätes vor, die von einem beispielsweise C- oder U-förmigen, das Gerät umgreifenden Schieber oder von einer Anzahl Schiebern übergriffen werden.

Die Erfindung hat den Vorteil, dass der Einbau des Gerätes in die Einbauöffnung durch Stecken des Gerätes in die Einbauöffnung und anschließendes Verschieben des Schiebers aus der Montage- in die Verriegelungsposition erfolgt. Der Einbau des Gerätes ist einfach und schnell zu bewerkstelligen. Weiterer Vorteil der Erfindung ist, dass sich die Verriegelungsfläche und der Schieber großflächig und stabil ausbilden lassen, so dass das Gerät sicher in der Einbauöffnung gehalten ist. Die erfindungsgemäße Anordnung lässt sich problemlos so ausbilden, dass sie das Gerät auch bei hohen Beschleunigungen von > 30 g (30-fache Erdbeschleunigung), wie sie bei einem Heckaufprall auftreten kann, in der Einbauöffnung hält.

Vorzugsweise ist die Verriegelungsfläche des Geräts an einer seitlich abstehenden Lasche, Nase oder dgl. ausgebildet. Eine solche Lasche, Nase oder dgl. ist einfach und nahezu kostenneutral bei der Herstellung eines Metall- oder Kunststoffgehäuses für das Gerät herstellbar.

Bei einer Ausgestaltung der Erfindung steht die Verriegelungsfläche seitlich vom Gerät ab.

Bei einer bevorzugten Ausgestaltung der Erfindung weist der Schieber eine Aufgleitfläche auf, die in einem Winkel zu einer Schieberichtung des Schiebers verläuft. Beim Verschieben des Schiebers aus der Montageposition in die Verriegelungsposition wirkt die Aufgleitfläche nach Art eines Keils, sie gleitet an der Verriegelungsfläche des Geräts entlang und drückt das Gerät gegen ein Widerlager. Das Gerät wird dadurch in der Ein bauöffnung festgeklemmt. Diese Ausgestaltung der Erfindung verhindert ein Klappern des Geräts.

Die Erfindung wird nachfolgend anhand eines in der Zeichnung dargestellten Ausführungsbeispiels erläutert. Es zeigen:

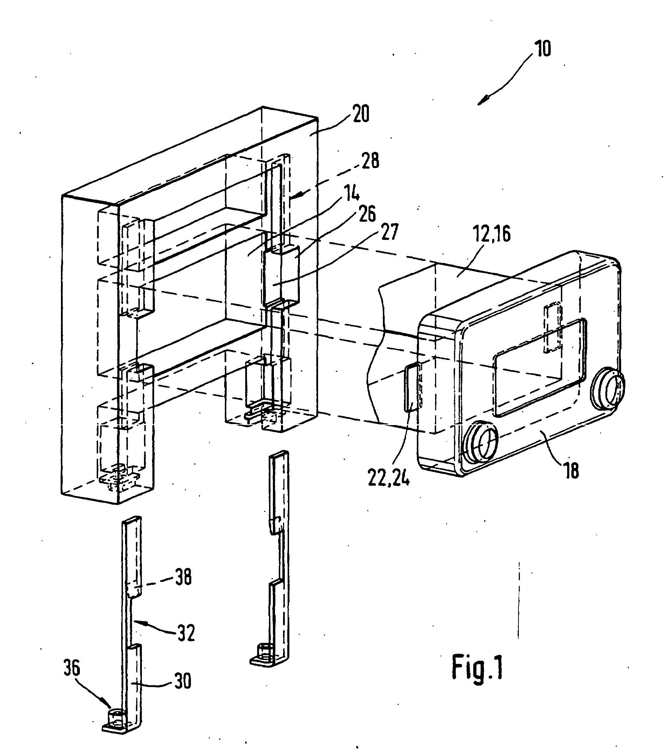

- Figur 1: eine perspektivische Explosionsdarstellung einer erfindungsgemäßen Anordnung; und
- Figur 2: eine Seitendarstellung der Anordnung aus Figur 1.

Die in der Zeichnung dargestellte, erfindungsgemäße Anordnung 10 dient zur Schnellbefestigung eines Gerätes 12 in einer Einbauöffnung 14. Das Gerät 12 ist beispielsweise ein Autoradio oder ein Navigationsgerät. Es weist ein quaderförmiges, in Draufsicht in etwa quadratisches und im Querschnitt rechteckförmiges Gehäuse 16 auf, an dessen Vorderseite eine Bedien- und Anzeigekonsole 18 angebracht ist, die seitlich sowie nach oben und unten über das Gehäuse 16 übersteht. Die Einbauöffnung 14 ist in einem Halterahmen 20 ausgebildet, der beispielsweise in einer nicht dargestellten Mittelkonsole oder einem Armaturenbrett eines Kraftwagens befestigt ist. Die Halteöffnung 14 kann auch Bestandteil der nicht dargestellten Mittelkonsole oder des nicht dargestellten Armaturenbretts sein. In diesem Fall entfällt ein separater Halterahmen 20. Die Einbauöffnung 14 ist als Durchbruch mit rechteckigem Querschnitt ausgebildet, die Einbauöffnung 14 ist komplementär zum Gerät 12. Das Gerät 12 lässt sich bis zur Anlage der überstehenden Bedien- und Anzeigekonsole 18 am Halterahmen 20 in die Einbauöffnung 14 stecken.

Am Gehäuse 16 des Geräts 12 sind seitlich abstehende Laschen 22 ausgebildet, die mit Abstand von der Bedien- und Anzeigekonsole 18 angeordnet sind. Der Bedien- und Anzeigekonsole 18 zugewandte Flächen der Laschen 22 bilden Verriegelungsflächen 24 des Geräts 12.

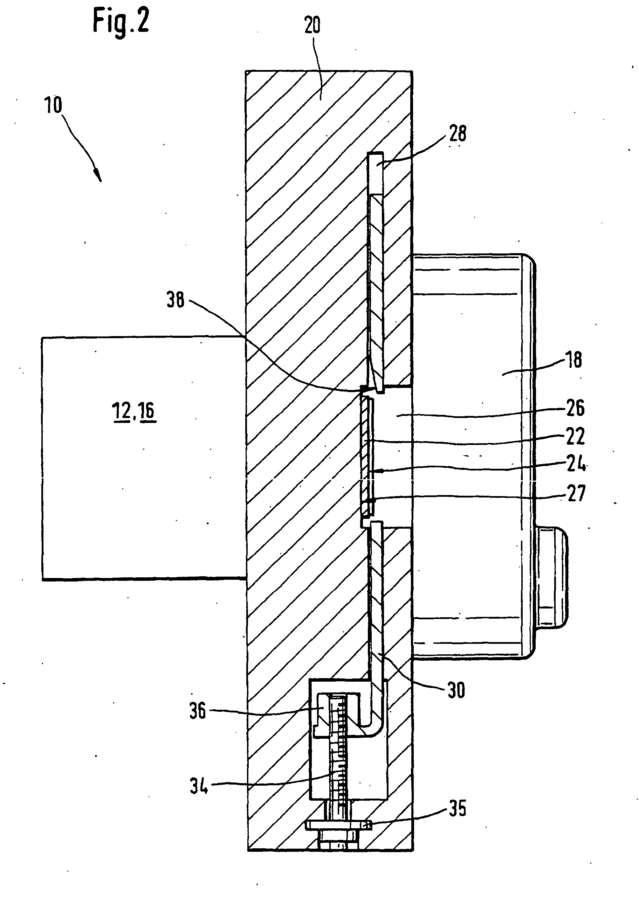

Der Halterahmen 20 ist mit Ausnehmungen 26 für die Laschen 22 versehen. Die Ausnehmungen 26 sind auf beiden Seiten der Einbauöffnung 14 angeordnet, sie sind sowohl zur Einbauöffnung 14 hin als auch in Richtung einer Frontseite des Halterahmens 20, also in Richtung der Bedien- und Anzeigekonsole 18 des Geräts 12 offen. Beim Stecken des Geräts 12 in die Einbauöffnung 14 gelangen die Laschen 22 des Geräts 12 in die Ausnehmungen 26 des Halterahmens 20. Im Gegensatz zur Einbauöffnung 14 gehen die Ausnehmungen 26 nicht durch den Halterahmen 20 hindurch, sondern die Ausnehmungen 26 sind so tief, dass die Laschen 22 an einem Grund 27 der Ausnehmungen 26 anliegen, wenn das Gerät 12 in die Einbauöffnung 14 gesteckt ist (vgl. Figur 2).

Auf beiden Seiten der Einbauöffnung 14 weist der Halterahmen 20 Schlitze 28 auf, in denen aus Blechstreifen bestehende Schieber 30 quer zur Steckrichtung des Geräts 12 verschiebbar einliegen. Die Schlitze 28 durchqueren die Ausnehmungen 26 mit einem Abstand vom Grund 27 der Ausnehmungen 26, der etwas geringer als eine Dicke der Laschen 22 ist. Die Schieber 30 sind mit Durchtrittsöffnungen 32 für die Laschen 22 des Geräts 12 versehen, die auf einer dem Gerät 12 bzw. der Einbauöffnung 14 zugewandten Seite der Schieber 30 offen sind. Die Schieber 30 sind zwischen einer in Figur 2 dargestellten Montageposition und einer nicht dargestellten Verriegelungsposition hin- und herschiebbar. In der Montageposition sind die Durchtrittsöffnungen 32 deckungsgleich mit den Ausnehmungen 26 des Halterahmens 20 für die seitlich abstehenden Laschen 22 des Geräts 12. In der nicht dargestellten Verriegelungsposition überdecken die Schieber 30 die Ausnehmungen 26 zumindest teilweise. Die Verriegelungsposition ist gegenüber der in Figur 2 dargestellten Montageposition nach unten verschoben.

Zum Verschieben der Schieber 30 weist die erfindungsgemäße Anordnung 10 Schrauben 34 auf, die mit ihrem Kopf 35 drehbar und unverschieblich im Halterahmen 20 einliegen (Figur 2). Die Schrauben 34 sind in Gewindebuchsen 36 der Schieber 30 eingeschraubt, wobei die Gewindebuchsen 36 an rechtwinklig umgebogenen Enden der Schieber 30 angebracht sind. Durch Drehen der Schrauben 34 lassen sich die Schieber 30 zwischen der Montageposition und der Verriegelungsposition hin- und herverschieben.

An einem Ende der Durchtrittsöffnungen 32 sind die Schieber 30 mit Aufgleitflächen 38 versehen, die im dargestellten Ausführungsbeispiel als Schrägflächen 38 ausgebildet sind. Die Schrägflächen 38 sind an dem Grund 27 der Ausnehmungen 26 des Halterahmens 20 zugewandten Flächen der Schieber 30 vorgesehen.

Die Funktion der erfindungsgemäßen Anordnung 10 ist folgende. Zur Schnellbefestigung des Geräts 12 in der Einbauöffnung 14 befinden sich die Schieber 30 in der in Figur 2 dargestellten Montageposition, in der die Durchtrittsöffnungen 32 der Schieber 30 für die Laschen 22 des Geräts 12 deckungsgleich mit den Ausnehmungen 26 des Halterahmens 20 sind. Das Gerät 12 wird mit seinem Gehäuse 16 in die Einbauöffnung 14 gesteckt, bis die Bedien- und Anzeigekonsole 18 am Halterahmen 20 und die seitlich vom Gehäuse 16 des Geräts 12 abstehenden Laschen 22 am Grund 27 der Ausnehmungen 26 anliegen. Anschließend werden die beiden Schieber 30 durch Drehen der Schrauben 34 in die Verriegelungsposition verschoben, in der sie die Verriegelungsflächen 24 der Laschen 22 übergreifen und dadurch das Gerät 12 sicher in der Einbauöffnung 14 verriegelt halten. Beim Verschieben der Schieber 30 aus der Montageposition in die Verriegelungsposition gleiten die Schrägflächen 38 an den Verriegelungflächen 24 der Laschen 22 entlang. Dabei wirken die Schrägflächen 38 der Schieber 30 nach Art von Keilen, sie drücken die Laschen 22 des Geräts 12 gegen den Grund 27 der Ausnehmungen 26, so dass die Laschen 22 zwischen den Schiebern 30 und dem Grund 27 der Ausnehmungen 26 festgeklemmt sind. Ein Klappern des Geräts 12 wird dadurch vermieden. Der Grund 27 der Ausnehmungen 26 bildet ein Widerlager 27 für die seitlich abstehenden Laschen 22 des Geräts 12.

## Patentansprüche

1. Anordnung zur Schnellbefestigung eines Gerätes in einer Einbauöffnung in einer Mittelkonsole oder dgl. eines Kraftwagens, mit einem Gerät (12) und einer Einbauöffnung (14), in die das Gerät (12) steckbar ist, wobei das Gerät (12) mindestens eine Verriegelungsfläche (24) aufweist, die einer Steckrichtung des Gerätes (12) abgewandt ist, wobei die Einbauöffnung (14) mindestens einen Schieber (30) aufweist, der in einer Verriegelungsposition die Verriegelungsfläche (24) des Gerätes (12) übergreift, so dass das Gerät (12) nicht aus der Einbauöffnung (14) herausgezogen werden kann, und wobei der Schieber (30) in eine Montageposition verschiebbar ist, in der er die Verriegelungsfläche (24) freigibt, **dadurch gekennzeichnet, dass** das Gerät (12) Verriegelungsflächen (24) an einander abgewandten Seiten aufweist, die in der Verriegelungsposition von einem Schieber (30) oder einer Anzahl Schiebern (30) übergriffen werden.

2. Anordnung nach Anspruch 1, **dadurch gekennzeichnet, dass** das Gerät (12) eine seitlich abstehende Lasche (22), Nase oder dgl. aufweist, an der die Verriegelungsfläche (24) ausgebildet ist.

3. Anordnung nach Anspruch 1, **dadurch gekennzeichnet, dass** die Verriegelungsfläche (24) von einer Seite des Gerätes (12) absteht.

4. Anordnung nach Anspruch 1, **dadurch gekennzeichnet, dass** der Schieber (30) eine Aufgleitfläche (38) aufweist, die in einem Winkel zu einer Schieberichtung des Schiebers (30) verläuft und die beim Verschieben des Schiebers (30) aus der Montageposition in die Verriegelungsposition an der Verriegelungsfläche (24) des Gerätes (12) entlang gleitet und das Gerät (12) gegen ein Widerlager (27) drückt.

## Claims

1. Arrangement for rapid securing of an apparatus in an installation opening in a central console or the like of a motor vehicle, comprising an apparatus (12) and an installation opening (14) in which the apparatus (12) can be inserted, wherein the apparatus (12) has at least one locking surface (24) that faces away from the direction of insertion of the apparatus (12), the installation opening (14) has at least one slide member (30) which engages over the locking surface (24) of the apparatus (12) in a locking position so that the apparatus (12) cannot be retracted from the installation opening (14), and the slide member (30) can be displaced to a mounting position in which it releases the locking surface (24), **characterized in that** the apparatus (12) has locking surfaces (24) on sides remote from one another, over which locking surfaces a slide member (30) or a plurality of slide members (30) engage(s) in the locking position.

2. Arrangement according to claim 1, **characterized in that** the apparatus (12) has a laterally projecting bracket (22), lug or the like on which the locking surface (24) is formed.

3. Arrangement according to claim 1, **characterized in that** the locking surface (24) projects from a side of the apparatus (12).

4. Arrangement according to claim 1, **characterized in that** the slide member (30) has a sliding-engagement surface (38) that extends at an angle to the sliding direction of the slide member (30) and which, upon displacement of the slide member (30) from the mounting position to the locking position, slides along the locking surface (24) of the apparatus (12) and presses the apparatus (12) against an abutment (27).

## Revendications

1. Dispositif pour la fixation rapide d'un appareil dans une baie d'encastrement dans une console centrale ou élément similaire d'un véhicule automobile, comprenant un appareil (12) et une baie d'encastrement (14), dans laquelle on peut enficher l'appareil (12), l'appareil (12) comportant au moins une surface de blocage (24), qui est opposée à une direction d'encastrement de l'appareil (12), la baie d'encastrement (14) étant munie d'au moins un élément coulissant (30), qui, dans une position de blocage, s'engage au-dessus de la surface de blocage (24) de l'appareil (12), de telle sorte que l'appareil (12) ne peut pas être extrait hors de la baie d'encastrement (14), et l'élément coulissant (30) pouvant coulisser dans une position de montage, dans laquelle il libère la surface de blocage (24), **caractérisé en ce que** l'appareil (12) comporte des surfaces de blocage (24) sur des cotés opposés, lesquelles, dans la position de blocage, sont recouvertes par un élément coulissant (30) ou une pluralité d'éléments coulissants (30).

2. Dispositif selon la revendication 1, **caractérisé en ce que** l'appareil (12) comprend une patte (22), un taquet ou élément similaire, faisant saillie latéralement, au niveau de laquelle est réalisée la surface de blocage (24).

3. Dispositif selon la revendication 1, **caractérisé en ce que** la surface de blocage (24) est en saillie sur un côté de l'appareil (12).

4. Dispositif selon la revendication 1, **caractérisé en ce que** l'élément coulissant (30) comporte une surface de montée (38), qui forme un angle avec la direction de déplacement de l'élément coulissant (30) et qui, pendant le coulissement de l'élément coulissant (30), glisse le long de la surface de blocage (24) de l'appareil (12) hors de la position de montage vers la position de blocage et pousse l'appareil (12) contre une butée (27).
